# EUROPEAN PATENT APPLICATION

(11) **EP 1 865 465 A1**
(43) Date of publication of application: **12.12.2007**
(21) Application number: 06462003.2
(22) Date of filing: 08.06.2006
(51) Int. Cl.: G06T 7/20, G01P 3/38, B60T 8/172, G01S 11/12

(54) **Device and process for determining vehicle dynamics**

(71) Applicant: Kalman, Viktor, 1016 Budapest (HU)
(72) Inventor: Kalman, Viktor, 1016 Budapest (HU)
(74) Representative: Sari, Tamas Gusztav

(57) **Abstract**

The invention provides an apparatus (1) for determining a vehicle dynamics during travel. The apparatus (1) comprises at least one imaging device (2) directed at a surface (4) relative to which the vehicle is travelling, the at least one imaging device (2) being suitable for capturing one or more images of said surface (4); a processing unit for analysing said one or more images and calculating the vehicle dynamics; wherein the apparatus (1) is provided with means for compensating for a change of distance between the imaging device (2) and said surface (4).
The invention also provides a method for determining a vehicle dynamics during travel, the method including the steps of:
- capturing one or more images of a surface relative to which the vehicle is travelling by means of an imaging device;
- processing said one or more images and calculating the vehicle dynamics there from via a processing unit;
wherein processing said one or more images include compensating for a change of distance between the imaging device and said surface.
In particular, the velocity and slip angle of an automobile are determined, compensating for a varying height.

## Description

The present invention relates to a device and a process for determining dynamic properties of a vehicle, in particular the velocity and slip angle of an automobile.

Measuring a variety of vehicle dynamics can be of interest both to developers (when testing a new model) and to end users (whilst driving). Determining track characteristics via the measurement of certain vehicle dynamics is particularly important for automobile racing teams, as the vehicles have to be adjusted constantly to the particular track characteristic (e.g. sloping of a track's curve and the track surface). For this reason various systems and apparatuses have been designed to satisfy the special needs arising in the field of automobile racing.

One such measuring apparatus is disclosed in US 6,130,706. The apparatus includes a camera directed at the surface over which the vehicle is travelling. The camera images are analysed either by comparing the displacement of surface features in two consecutive frame images or by analysing the length and direction of streaks in a single frame image formed by the motion of the surface features.

In the first case individual surface features are identified in two consecutive, closely spaced frames and the location change of the surface features is monitored to determine the direction of travel. The speed of travel can also be calculated from the time elapsed between capturing a first and a consecutive frame image and the average length of the motion vectors connecting the position of the corresponding surface features in the first and the consecutive frame image. High-speed cameras can be substituted by strobe lights used together with a camera having longer shutter speed. In this case two short flashes are performed within a single camera frame and the two sets of individual features are then extracted from this single frame and again, motion vectors of the features can be determined. In a second embodiment the shutter speed of the camera is set such that the motion of surface features in a single capture interval forms streaks. The direction of travel can be determined from the average direction of the streaks, whilst the speed of travel can be calculated from the average length of the streaks and the shutter speed.

The disclosure does not address the problem of compensating for a varying height from which the surface is monitored since this is normally not an issue in the case of cameras mounted on race cars. Racing tracks have an even flat surface and race cars have special air dams, wings, spoilers, etc. designed to increase the downforce causing the car to press closer to the ground. As a consequence the camera-ground distance varies only within a very limited range hence a varying height does not affect the outcome of the measurements.

This is not the case for mass-production cars (passenger cars, vans, lorries, etc.) where no extra care is taken to press the vehicle down and which are normally driven over less perfect surfaces, hence the suspension means can produce a greater vertical displacement, meaning that a camera mounted on the body of the car will view the surface from a considerably varying height, which, if not compensated for, can discredit the results of the entire measurement. Also, certain automobiles have special adjusting means to lift or lower the chassis with respect to the ground, which also results in the altering of the camera height.

One of the problems associated with varying height (meaning the distance of the camera and the monitored surface) is inaccurate displacement measurement. As mentioned above displacement can be determined from the length of the streaks formed in a single frame image or from the motion vectors connecting matching individual surface features. However, the same displacement will seem shorter or longer depending on the angle of view, which is directly related to the height from which the surface is viewed. Hence if no accurate camera height information is available for compensating for the varying angle of view, then the displacement (or motion vectors) of the surface features determined from one or more camera frame images cannot be evaluated in a reliable way. This is particularly disturbing when seeking to determine velocity related vehicle dynamics, where the length and the change of the length of the motion vectors are of crucial importance. On the other hand alternative speed measurement is one of the chief objects of supplementary monitoring means. Vehicles, such as automobiles are, as a rule, equipped with a speed meter. However, in order to ensure safe travelling conditions it is desirable to have alternative means for measuring the key travel properties, such as speed, since information redundancy is the warrant for reliable feedback. Also, the speed of a vehicle is generally calculated from the number of turns performed by the wheels, hence no relevant data is at hand in the instances where the monitored wheel(s) slip.

A further problem associated with varying camera height is focusing. If the camera height can vary within a considerable range then special provisions are needed to ensure the capturing of well-focused images at both extremities of the camera height range. It will be appreciated that the individual surface features are hard, if not impossible, to identify in a blurred, out-of-focus image and matching such poorly identified features can lead to a high rate of error. Camera objectives having an adequate depth of view even for tolerating a change of height of 3 - 5 cm at a distance of approximately 15 to 25 cm (passenger car) are expensive.

It is an object of the present invention to overcome the above- mentioned problems associated with varying camera height by providing means for compensating for a change of height, i.e. the distance between the camera and the monitored surface. Compensating for the change of height can include compensating for the observed motion associated with the change of height, such motion not being relevant when assessing the sought vehicle dynamics. It can also include focus compensation for maintaining the monitored surface in focus.

In a first aspect the invention provides an apparatus for determining a vehicle dynamics during travel. The apparatus comprises at least one imaging device directed at a surface relative to which the vehicle is travelling, the at least one imaging device being suitable for capturing one or more images of said surface; a processing unit for analysing said one or more images and calculating the vehicle dynamics there from; wherein the apparatus is provided with means for compensating for a change of distance between the imaging device and said surface.

In a second aspect the invention provides a method for determining a vehicle dynamics during travel, the method including the steps of:
- capturing one or more images of a surface relative to which the vehicle is travelling by means of an imaging device;
- processing said one or more images and calculating the vehicle dynamics there from via a processing unit;
wherein processing said one or more images include compensating for a change of distance between the imaging device and said surface via compensating means.

In a preferred embodiment the compensating means is a telecentric optics making sure that the captured images will not reflect any motion due to the change of distance between the imaging device and the monitored surface.

In another preferred embodiment the compensating means allows for measuring or calculating the camera height, hence the change of distance between the imaging device and said surface. The obtained camera height information can be advantageously used to control the focus of the camera in order to obtain well-focused images of the monitored surface.

Once the change of camera height has been compensated for the vehicle dynamics can be calculated in any known way.

Further advantageous embodiments of the invention are defined in the attached dependent claims.

Further details of the invention will be apparent from the accompanying figures and exemplary embodiments.

Fig. 1 is a schematic perspective view of a first embodiment of a measuring apparatus according to the invention.

Fig. 2 is a schematic block diagram of an ultrasonic cleaning device designed for the measuring apparatus of the invention.

Fig. 3a-3e schematically illustrates how optical flow is perceived in two images taken by a camera moving perpendicular to its field of view.

Fig. 4a-4e schematically illustrates two captured images as the camera moves parallel to the monitored surface.

Fig. 5 illustrates the resulting displacement vector when the monitored surface points are not evenly distributed around the optical axis of a camera.

Fig. 6a-6d is a schematic illustration of how optical flow can be modelled in case a camera moves both perpendicular and parallel to a monitored surface.

Fig. 7a illustrates an image captured of three cylindrical objects by a traditional camera.

Fig. 7b illustrates an image captured of three cylindrical objects by a telecentric camera.

Fig. 8. is a schematic block diagram of a further embodiment of a measuring apparatus according to the invention.

Fig. 9 is a schematic view illustrating how the Scheimpflug principle can be made use of in a measuring apparatus according to the invention.

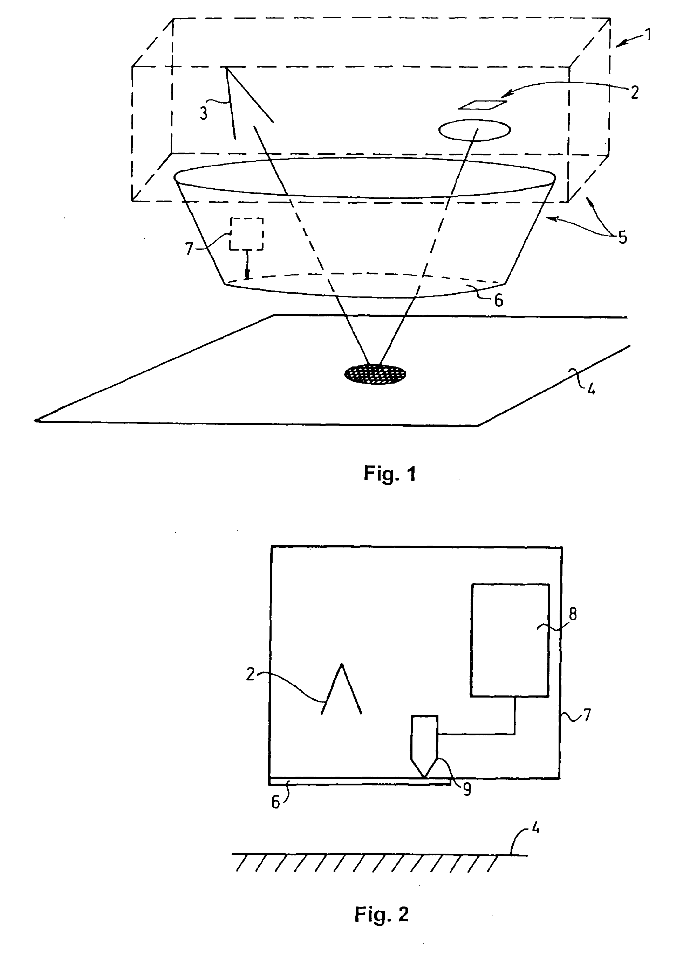

Fig. 1 schematically illustrates a first preferred embodiment of a measuring apparatus 1 in accordance with the present invention. The apparatus 1 comprises a camera 2 and illumination means, such as a LED 3. The apparatus 1 can be mounted on the bottom of a vehicle (not shown) in such a way that both the LED 3 and the camera 2 are directed at a surface 4 over which the vehicles is travelling. Preferably, the apparatus is mounted at a front part of the vehicle where it is less at risk of being hit by pebbles or other small objects thrust up by the wheels. For the same reason the apparatus 1 is advantageously provided with a protective housing 5 having a transparent portion 6 separating the camera 2 and LED 3 from the monitored surface 4.

It is possible to equip the transparent portion 6 with an ultrasonic cleaning device 7 depicted in Fig. 2. The concept of the ultrasonic cleaning device 7 is well know in the art, in this embodiment it comprises an ultrasound generator 8 and a transmitter 9 being in touch with the transparent portion 6 so as to transmit the ultrasonic frequency generated by the generator 8. The main mechanism for cleaning action in an ultrasonic cleaner is the energy released from the collapse of millions of microscopic cavitation events occurring in the liquid of the cleaner.

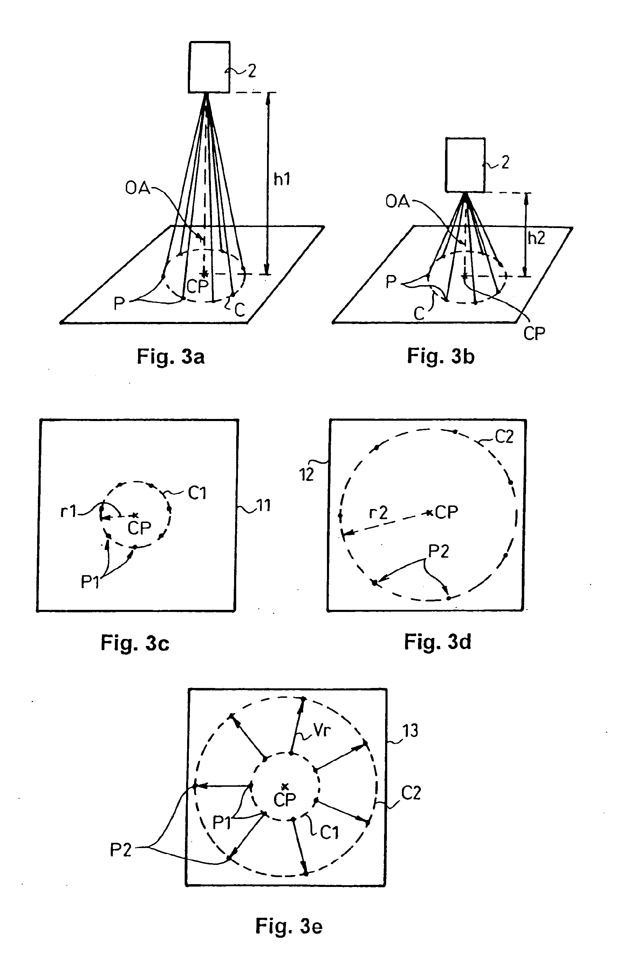

As explained above the distance between the camera 2 and the surface 4 can vary due to the irregularities of the surface 4 which causes the vehicle's body to lift or sink with respect to the surface 4 via its suspension means. Fig. 3a - 3e illustrate what happens when the camera height h1 drops to h2 meaning that the distance between the camera 2 and the surface 4 decreases. As can be seen in Fig. 3a and 3b a set of surface points P are lying on the circumference of a circle C centred on the optical axis OA of the camera, more precisely the centre point CP of the circle C corresponds to the intersection of the optical axis OA of the camera 2 and the surface 4. The corresponding image points P1 in a first image 11 (Fig. 3c) captured at the first camera height h1 lie on a first circle C1 having a first radius r1. As the camera sinks to a second height h2 (Fig. 3b) the corresponding image points P2 of a second image 12 (Fig. 3d) spread out and form a second circle C2 having radius r2, which is greater than radius r1. Fig. 3e shows a combined image 13 containing both the first set of image points P1 and the second set of image points P2. Radial motion vectors V indicative of the camera height change have been drawn between the image points P1 and P2 corresponding to the same surface points P.

In this special example the camera position only changed in a direction perpendicular to the surface 4 hence both circles C1 and C2 in the images 11 and 12 have the same centre points CP (which is the image point of the intersection of the optical axis OA and the surface 4) and the corresponding image points P1 and P2 all lie on a straight line intersecting at the centre point CP. Thus the motion vectors Vr are all radial and their lengths are r2-r1. A skilled person will appreciate that the strictly radial direction of the motion vectors V indicate that the camera 2 only moved in a direction perpendicular to the surface 4. The skilled person will also be able to calculate the change of camera height (h2-h1) from the length of the radial motion vectors Vr (r2-r1).

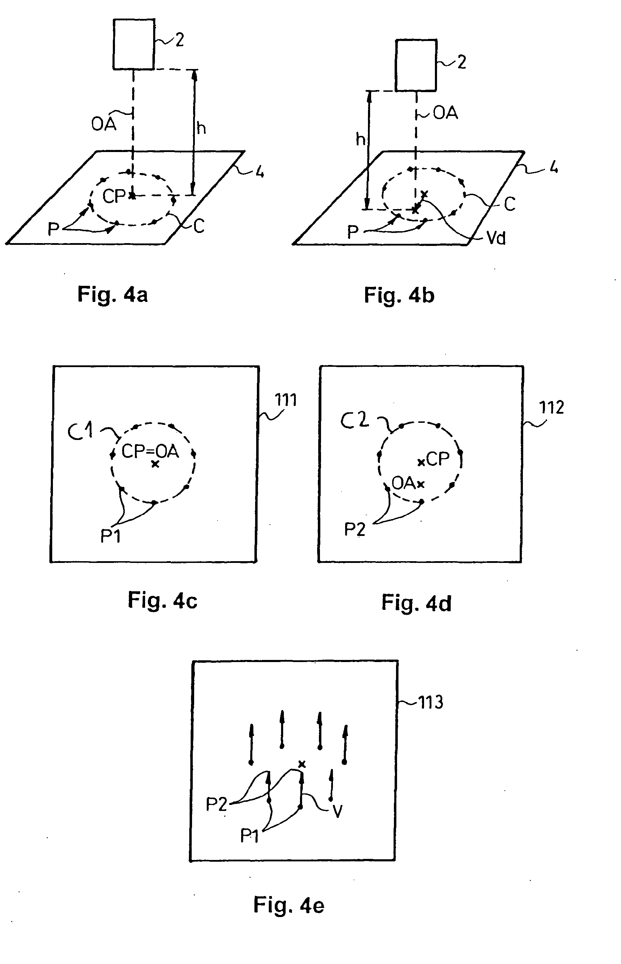

Fig. 4a - 4e illustrate what happens when the camera 2 moves parallel to the monitored surface 4. In Fig 4a the camera 2 can be seen at a first position with regard to the surface 4. In Fig. 4b the camera 2 is displaced with a vector Vd parallel to the surface, the camera height h remaining the same. Thus the monitored P points of the surface 4 move in an opposite direction with respect to the camera 2 and the optical axis OA no longer corresponds to the centre point CP of the circle C. The distance of the optical axis OA and the centre point CP equals to the length of the displacement vector Vd. Fig. 4c is a view of a first image 111 containing a first set of image points P1 aligned on a first circle C1 centred on the optical axis OA of the camera 2 at the first camera position (Fig. 4a) and having radius r1. Fig. 4d shows a second image 112 captured at the second camera position (shown in Fig. 4b) where the camera 2 has been displaced parallel to the surface 4 by the displacement vector Vd. Thus the second circle C2 defined by the second set of image points P2 are no longer centred on the optical axis OA of the camera 2 at the second camera position. It should be noted that the optical axis OA is always at the centre of the whole image and the image points P2 corresponding to the monitored surface points P will appear to have moved out of the image as the camera 2 is displaced parallel to the surface 4.

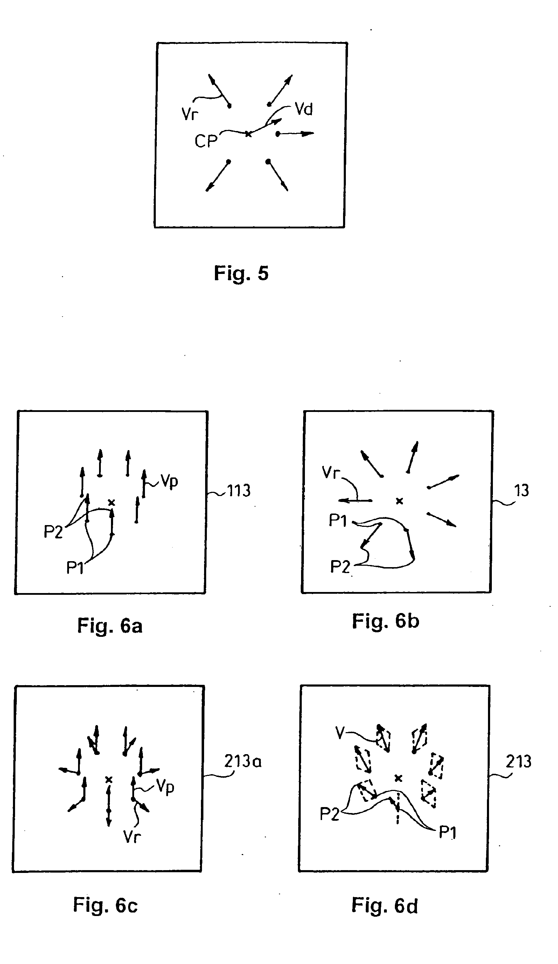

Fig. 4e shows a combined image containing both first and second set of image points P1, P2 and the motion vectors V indicating the displacement between each two corresponding image points P1, P2. The motion vectors V equal to the displacement vector Vd in length and are directed in the opposite direction. Thus the motion vectors V are indicators of the displacement of the surface points P with respect to the camera 2, that is, with respect to the vehicle on which the camera 2 is mounted. Such motion vectors can be obtained in various ways for example as described in US 6,130,706. Dynamic properties of the vehicle (such as e.g. speed, slip angle) can be readily calculated from the motion vectors V as explained in detail in the referred prior art document. However such calculations are only valid as long as the camera-surface distance (that is the camera height) is constant. For most of the vehicle dynamics of interest the only relevant motion is the one parallel to the surface 4 (referred to as parallel motion from now on). For example when seeking to determine the speed of a vehicle it is sufficient to know the parallel displacement over a given time. If no parallel motion is present the speed calculation should result in 0. However this is not the case if the camera 2 can move perpendicular to the surface 4 (from now on referred to as perpendicular motion). As illustrated in Fig. 3a to 3e the image points P1, P2 seem to spread out resulting in multiple radial motion vectors Vr. If the monitored surface points P are distributed evenly around the optical axis OA of the camera 2 then applying a simple averaging as suggested in the prior art document will ensure that the radial motion vectors Vr disappear and the resulting displacement vector Vd of the camera 2 will be 0. However, if the monitored surface points P are located unevenly, as shown in Fig. 5, then the vector average of the radial motion vectors Vr will result in a false non-zero displacement vector Vd, which should be correctly 0. The monitored surface points P are often the distinguishable surface features, that is the ones that can be distinguished in an image captured by the camera 2. Thus it cannot be ensured that such surface points P are distributed evenly on the monitored surface 4. It is therefore necessary to provide means for compensating for the change of camera height h.

By way of example Fig. 6a to 6d depict what happens when the camera 2 moves both parallel and perpendicularly to the monitored surface 4. An arbitrary displacement of the camera 2 can be regarded as the superposition of a parallel and a perpendicular displacement, hence the composite images 13 and 113 illustrative of the perpendicular and the parallel displacement can serve as the starting point when assessing a composite image 213 at an arbitrary camera displacement. As can be seen the parallel motion image component depicted in Fig. 6a corresponds to the composite image 113 of Fig. 4e while the vertical motion image component in Fig. 6b corresponds to the composite image 13 of Fig. 3e. An auxiliary composite image 213a is shown in Fig. 6c to better illustrate the resulting composite image 213 of Fig 6d. As can be seen the parallel motion vectors Vp obtained from the parallel motion and indicative of the sought vehicle dynamics are misaligned by the superposed radial motion vectors Vr due to the perpendicular displacement of the camera 2. Once again, if the monitored surface points P are located evenly around the optical axes OA than the vector average of the motion vectors V of the composite image 213 equals to the vector average of the parallel motion vectors Vp as the vector sum of the radial motion vectors Vr is 0. However, if this is not the case, then the resulting vector average of the motion vectors V will not correspond to the horizontal displacement of the camera 2 and hence the desired vehicle dynamics cannot be obtained.

To overcome this problem various means are suggested herein for compensating the perpendicular displacement of the camera 2.

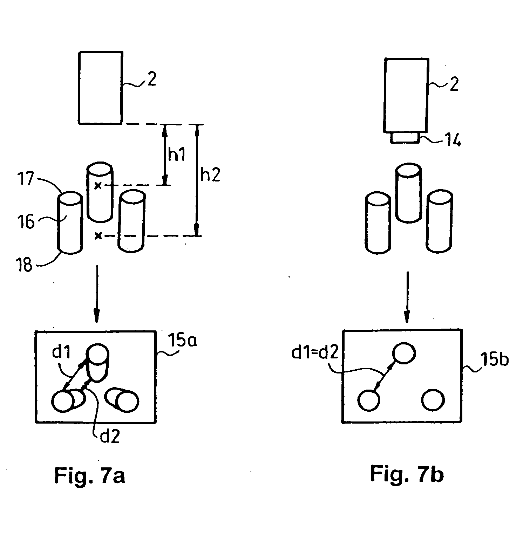

In a first embodiment of the invention the compensating means is a telecentric optics. Telecentricity is a special property of certain multi-element lens designs in which the chief rays for all points across the object or image are collimated. Telecentricity occurs when the chief rays are parallel to the optical axis, in object and/or image space. It is well known in the art that in a system with object space telecentricity, movement of the object toward or away from the lens will not result in the image getting bigger or smaller, and an object which has depth or extent along the optical axis will not appear as if it was tilted. Fig. 7a and 7b illustrates how a telecentric optics 14 can compensate for the height difference. Fig. 7a shows the image 15a captured of three standing cylindrical objects 16 by a traditional camera arranged above the objects 16. The top part 17 and the bottom part 18 of the objects 16 lie in different plains thus they are viewed from a different camera height h1 and h2 correspondingly. Accordingly the top parts 17 appear at a greater distance d1 to each other while the bottom parts 18 are at a smaller distance d2 to each other in the captured image 15a. Fig. 7b illustrates what happens if a telecentric optics 14 is placed before the camera 14. The camera height difference (h2-h1) is compensated for by the optics 14 thus resulting image 15b is a vertical projection of the cylindrical objects 16, where the top parts 17 cannot be distinguished from the corresponding bottom parts 18, hence the two distances d1 and d2 are identical, as would be necessary for obtaining the correct vehicle dynamics in case of the measuring apparatus 1 according to the invention. Thus providing the camera 2 of the measuring apparatus 1 with a known kind of telecentric optics 14 can ensure that the radial motion vectors Vr do not appear at all. Suitable telecentric optics 14 can be for example one commercialised by Edmund Optics Inc..

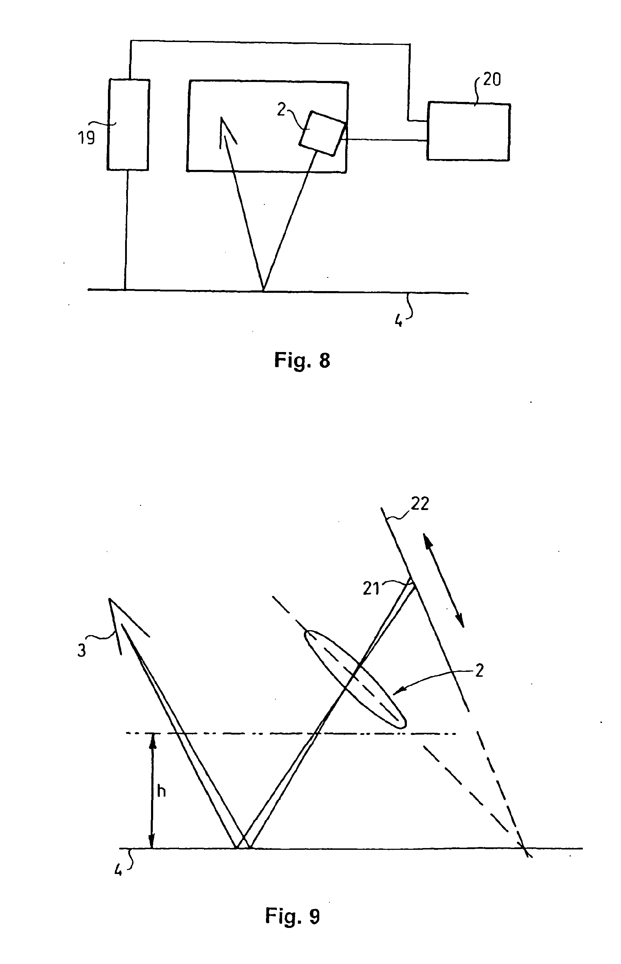

In a second embodiment of the invention the alternating camera height is compensated via hardware and software means. The hardware means can be any device suitable for measuring distance quickly and accurately, for example a laser range finder 19 as illustrated schematically in Fig. 8. Laser range finders making use of the so called "time of flight" principle are often used in testing vehicle properties, thus it is also known in the art how to assemble such measuring devices on a vehicle. It is important to note that the laser range finder 19 must be arranged so as to move together with the camera 2 in the perpendicular direction. Practically the laser range finder 19 could be mounted in the close proximity of the camera on the same portion or component of the vehicle which is also responsible for determining the camera height, for example both could be mounted on the carriage of the vehicle. It is also possible to attach the laser range finder 19 to the camera 2.

The laser range finder 19 provides a signal indicative of the change of height, which could be used to calculate the optical flow, that is, the radial motion vectors Vr appearing due to the change of height, which can then be subtracted to obtain the parallel motion vectors Vp giving the correct parallel displacement vector Vd of the camera. A processing unit 20 such as a processor, a computer, a microcontroller, a micro-chip or similar can be used to process the signal provided by the measuring device and to logically compensate for the radial optical flow. The processor unit 20 can be integrated into a board computer of the vehicle. Such a board computer could also be used to communicate the calculated vehicle dynamics to the driver or to compensate for any unwanted effects associated with said vehicle dynamics, e.g. if the slip angle is found to differ from 0 the board computer could automatically adjust the steering of the vehicle. The obtained vehicle dynamics could also serve as a control parameter to the conventional measuring equipment like the speed meter, which could give false data e.g. in case the wheels slip. It should be understood that such processing unit 20 and/or board computer could be used together with any embodiment of the invention.

A third way of compensating for the camera height changes is to use the Scheimpflug principle (GB 1196/1904) as illustrated in Fig. 9. In this embodiment the camera 2 is directed at the monitored surface 4 at an angle and the compensating means is a sensor component 21 detecting the location of the image in the image plane 22 of the camera 2, which changes together with the camera height change. The sensor component 21 also provides a signal indicative of the location of the image. A similar processing unit 20 as discussed above can be provided to receive the signal and to deduce camera height change from the change of location.

A further embodiment of the invention comprises a calculating unit, which uses the image 213 captured by the camera 2 at an arbitrary displacement of the camera 2 to calculate the camera height change from the optical flow or to calculate the radial motion vectors Vr directly. Once the radial motion vectors Vr are at hand they are subtracted and the horizontal motion vectors Vh are averaged to obtain the horizontal displacement vector Vd indicative of the vehicle dynamics. The calculating unit can be integrated into the processing unit 20.

In case of the above-described embodiments where the camera height or the change of height can be measured or calculated this information can be used advantageously for adjusting the focus of the camera 2. As explained earlier the camera objective might not have an adequate depth of view for tolerating for the change of height. In such cases focusing needs to be controlled and the focus has to be adjusted according to the camera height. For example the focus control and adjustment can be controlled by the processing unit 20 in a known way or means for measuring or calculating the camera height can provide focus control signals indicative of the camera height directly for the camera 2.

In yet another embodiment of the invention the camera 2 is substituted by two imaging devices of the line camera type. The line cameras are arranged at an angle to each other, preferably at a right angle for the sake of easier calculation. The two line cameras are capable of registering all the important information that would be contained in the 2-dimensional image of a traditional camera 2 but are cheaper and allow for a faster evaluation of the information contained in the captured images in comparison with a suitable quality 2D camera. This is because the line cameras register a decreased amount of information. Namely, in the case of two line cameras arranged at a right angle to each other the two images captured by the line cameras correspond to projecting the light intensity of a 2D image having the same area as defined by the perpendicular line cameras on its two perpendicular sides. However this decreased amount of information is adequate for calculating the change of height and the parallel displacement as will be apparent to a skilled person.

The two line cameras can be used together with any of the above-described means for compensating for the camera height changes.

The above-described embodiments are intended only as illustrating examples and are not to be considered as limiting the invention. Various modifications will be apparent to a person skilled in the art without departing from the scope of protection determined by the attached claims.

## Claims

1. Apparatus for determining a vehicle dynamics during travel, the apparatus comprising:
- at least one imaging device directed at a surface (4) relative to which the vehicle is travelling, the at least one imaging device being suitable for capturing one or more images of said surface (4);
- a processing unit (20) for analysing said one or more images and calculating the vehicle dynamics there from;
wherein the apparatus is provided with means for compensating for a change of distance between the imaging device and said surface (4).

2. The apparatus according to claim 1, wherein the compensating means is a telecentric optics (14).

3. The apparatus according to claim 1, wherein the compensating means is a distance measuring device providing a signal for the processing unit (20) indicative of the distance between the imaging device and said surface (4).

4. The apparatus according to the previous claim, wherein the distance measuring device is a laser range finder (19).

5. The apparatus according to claim 1, wherein the imaging device is directed at said surface at an angle and the compensating means is a sensor component detecting the location of the image in the image plane of the imaging device and providing a signal for the processing unit (20) indicative of said location which is indicative of the distance between the imaging device and said surface (4).

6. The apparatus according to claim 1, wherein the compensating means is a calculating unit for determining the optical flow in said images captured by the imaging device and calculating the distance between the imaging device and said surface there from and providing a signal for the processing unit (20) indicative of said distance.

7. The apparatus according to claim 6, wherein the calculating unit is an integrated part of the processing unit (20).

8. The apparatus according to any one of claims 3 to 6, wherein the signal indicative of the distance between the imaging device and said surface (4) is used to control focusing of the imaging device.

9. The apparatus according to any of the previous claims, wherein the apparatus comprises at least two imaging devices of the line camera type and being arranged at an angle to each other.

10. The apparatus according to any of the previous claims, wherein the processing unit (20) is an integrated part of board computer of the vehicle.

11. A method for determining a vehicle dynamics during travel, the method including the steps of:
- capturing one or more images of a surface relative to which the vehicle is travelling by means of an imaging device;
- processing said one or more images and calculating the vehicle dynamics there from via a processing unit;
wherein processing said one or more images includes compensating for a change of distance between the imaging device and said surface via compensating means.

12. The method according to claim 11, wherein compensating for the change of distance between the imaging device and said surface includes measuring the distance between the imaging device and said surface.

13. The method according to claim 11, wherein the imaging device is directed at said surface at an angle and compensating for the change of distance between the imaging device and said surface includes detecting the location of the image in the image plane of the imaging device and calculating said change of distance between the imaging device and said surface from the detected location.

14. The method according to claim 11, wherein compensating for the change of distance between the imaging device and said surface includes calculating the optical flow in said one or more images captured by the imaging device and calculating the change of distance between the imaging device and said surface there from.
